Europäisches Patentamt

European Patent Office

Office européen des brevets

(19)

(11) EP 0 633 669 B1

(12) EUROPEAN PATENT SPECIFICATION

(45) Date of publication and mention
of the grant of the patent:
**18.11.1998 Bulletin 1998/47**

(51) Int Cl.⁶: **H04B 3/54**, H04L 25/06

(21) Application number: 94304792.8

(22) Date of filing: 30.06.1994

(54) **Method and apparatus for the detection of transmitted data in an electrical power distribution network**

Verfahren und Vorrichtung zur Erfassung von gesendeten Daten in einer elektrischen Energieverteilungsanlage

Procédé et dispositif pour la détection de données transmises dans un réseau d'alimentation en énergie électrique

(84) Designated Contracting States:
AT CH DE FR GB IT LI NL SE

(30) Priority: 05.07.1993 FI 933081

(43) Date of publication of application:
11.01.1995 Bulletin 1995/02

(73) Proprietor: ENERMET OY
SF-40420 Jyskä (FI)

(72) Inventors:
• Estola, Kari-Pekka
SF-90140 Oulu (FI)

• Jyrkka, Kari
SF-90580 Oulu (FI)

(74) Representative:
Dempster, Benjamin John Naftel et al
Withers & Rogers,
4 Dyer's Buildings,
Holborn
London EC1N 2QP (GB)

(56) References cited:
EP-A- 0 254 846          CH-A- 670 923

## Description

The invention is related to a detection method according to the preamble of claim 1 for transmission of data in an electric power transmission network.

The invention also concerns a detection apparatus for use in transmission of data in an electric power transmission network.

Such method and apparatus is disclosed in EP-A-0 254 846.

Electric power transmission networks are nowadays utilized in the transmission of data employed for the control and supervision of the network operation. Data transmission today typically takes place via phase-modulated serial channels having a carrier frequency of, e.g., 3025 Hz. Correspondingly, data transmission rates in concurrent systems typically are 12.5 bit/s or 50 bit/s. This makes the duration of a single symbol transmission equal to 80 or 20 ms, respectively.

When transmitting, e.g., at 50 bit/s data transmission rate in a 50 Hz power system, the harmonics of the power system fundamental frequency coincide with the main lobe of the data signal power spectrum causing significant impairment of the bit error rate. Obviously, the same problem occurs in a 60 Hz power system when using a 60 bit/s data transmission rate. As increasing the data transmission rate also increases the bandwidth of the signal main lobe in the signal power spectrum, the higher data transmission rate also increases the number of harmonics of power system fundamental frequency coinciding with the main lobe of the signal power spectrum, which results in greater disturbance problems at higher data transmission rates.

Moreover, pink noise and a DC component in the signal to be detected cause errors in the determination of symbol values from the detected signal.

It is an object of the present invention to achieve an entirely novel type of detection method and apparatus for transmission of data in an electric power transmission network.

The invention is based on performing the detection of a digital signal comprised of n symbols by assuming the first symbol (or symbols) of a data sequence known *a priori* and then integrating the symbols for the period duration of the disturbance harmonic component, or some multiple thereof, and finally determining the new symbol on the basis of the integration result and the symbol(s) known *a priori*. The integration is performed n-j times for a data sequence of n symbols, where j is the number of *a priori* known symbols. Hence, according to the definition of the invention, the *a priori* known symbols are included in the length of the data sequence. Additionally, the detected signal is analyzed to determine possible pink noise in the input signal, and this information is employed in the determination of the symbol values.

The apparatus according to the invention is correspondingly based on having means suited to implement said integration and decision-controlled feedback.

More specifically, the method according to the invention is characterized by what is stated in the characterizing part of claim 1.

Furthermore, the apparatus according to the invention is characterized by what is stated in the characterizing part of claim 4.

The invention offers significant benefits.

The embodiment according to the invention achieves enhanced reliability of data transmission, since the disturbance incurred by the harmonics of the power system fundamental frequency can be effectively eliminated. Further improvement in error correction is attained by detection of pink noise. The lowered bit error rate speeds data transmission throughput as the need for data retransmission is reduced by virtue of the improvements according to the invention.

In the following, the invention will be examined in more detail by means of exemplifying embodiments with reference to the attached drawings, in which:

Figure 1a is a frequency-domain power spectrum of a typical signal subjected to disturbance by coinciding harmonics of the power system fundamental frequency;

Figure 1b is the spectral presentation of the signal shown in Fig. 1a after demodulation to the baseband;

Figure 2 is a block diagram of an apparatus suited to implement the embodiment according to the invention;

Figure 3 is a block diagram of a detection apparatus according to the invention;

Figure 4 is a diagrammatic presentation of the estimation of detection thresholds for a data sequence of 6-bit length; and

Figure 5 is a diagrammatic presentation of waveforms occurring in the embodiment according to the invention.

In the following the invention is described in an environment chiefly related to BPSK (Binary Phase Shift Keying) modulation, wherein one data bit corresponds to one symbol. However, the invention is not limited by the modulation method, and consequently, it can be utilized in conjunction with, e.g., QPSK (Quadrature Phase Shift Keying) modulation, wherein one symbol comprises two data bits.

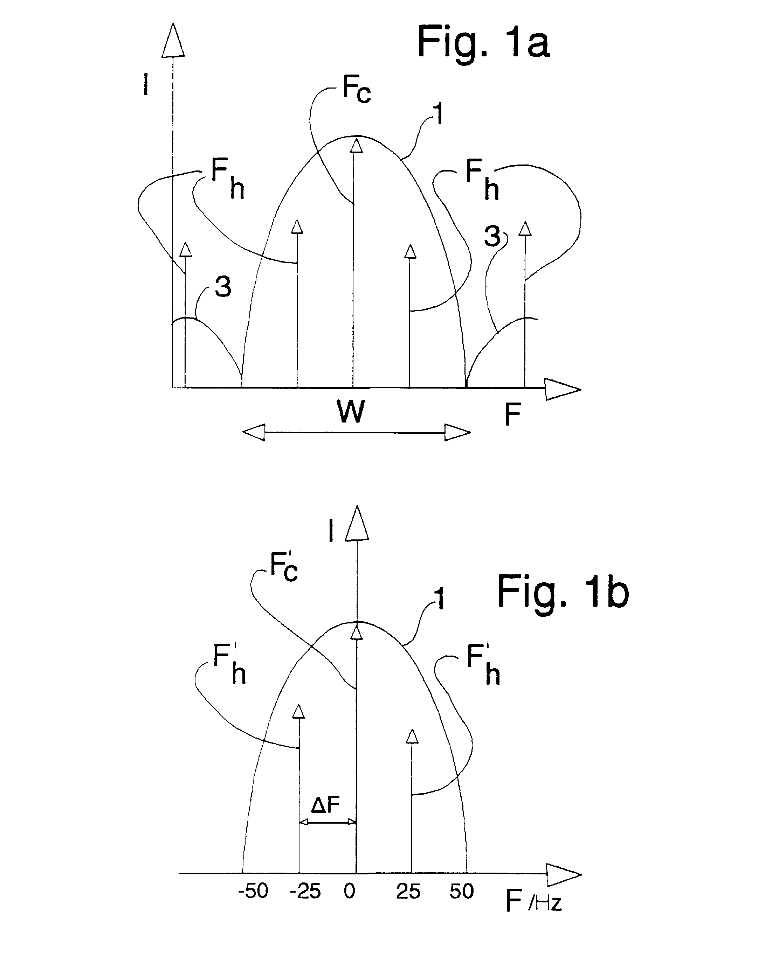

With reference to Fig. 1a, a the power spectrum of a digital signal represented in the frequency domain comprises a main lobe 1 with a center frequency $F_c$, and side lobes 3 at both sides of the main lobe 1. The energy content of the sidelobes 3 is the smaller the farther they are displaced from the main lobe center frequency $F_c$. Hence, the major energy content of the signal is contained in the main lobe 1. The disturbance frequency components $F_h$ are integer harmonics of the 50 Hz power system fundamental frequency and thus situated at 50 Hz spacings in the frequency domain graph at frequencies of, e.g., 3000, 3050, 3100 Hz, etc. The main lobe center frequency $F_c$, which in fact is the carrier frequency, is for practical reasons set exactly to one of the disturbance frequency components $F_h$, or alternatively, exactly between two such disturbance frequency components. In this embodiment, the latter alternative is chosen, and therefore, a typical center frequency of 3025 Hz is used. The bandwidth W of the main lobe 1 is determined by the data transmission rate of the signal so that the higher the data rate, the wider the bandwidth of the lobe. When using the 2PSK modulation, the bandwidth W of the main lobe 1 in the frequency domain is 2 x the data transmission rate $F_s$ of the signal. As is evident from the diagram, two harmonic disturbance frequency components $F_h$ (3000 Hz and 3050 Hz) of the 50 Hz power system fundamental frequency fall at the 50 bit/s data transmission rate within the main lobe 1. Elimination of such disturbance harmonics by means of conventional filtering methods would cause an excessive reduction of main lobe signal energy with respect to the gain obtained by such filtration.

With reference to Fig. 1b, the signal is converted to a baseband frequency $F_c'$, whereby the signal center frequency in the exemplifying case is 0 Hz, and correspondingly, the dominating disturbance harmonics of the power system frequency are shifted to frequencies -25 Hz and +25 Hz. Hence, the difference frequency $\Delta F$ between the center frequency $F_c'$ and the disturbance frequency component $F_h'$ is 25 Hz. As is evident from the diagram, the transmission rate is selected so that the duration of two or more symbols is equal to or an integer multiple of the period duration of the lowest-frequency harmonic $F_h'$ (25 Hz) of the power system fundamental frequency after being converted to the baseband frequency and demodulated. In this case the data transmission rate is 50 bit/s.

Then, the integration over the period duration (or some multiple thereof) of the lowest-frequency harmonic $F_h'$ (25 Hz) of the power system fundamental frequency, after being converted to the baseband frequency and demodulated, achieves the elimination of the disturbance harmonics of the power system fundamental frequency.

The invention is characterized in that the sum of the symbol durations $\lambda_D$ is equal to the period duration, or a multiple thereof, of the lowest-frequency harmonic $F_h'$ of the power system fundamental frequency after conversion to the baseband by demodulation. At 50 bit/s data transmission rate, said period duration includes two symbols. At 75 bit/s rate, the period duration includes three symbols, and at 100 bit/s rate four, respectively.

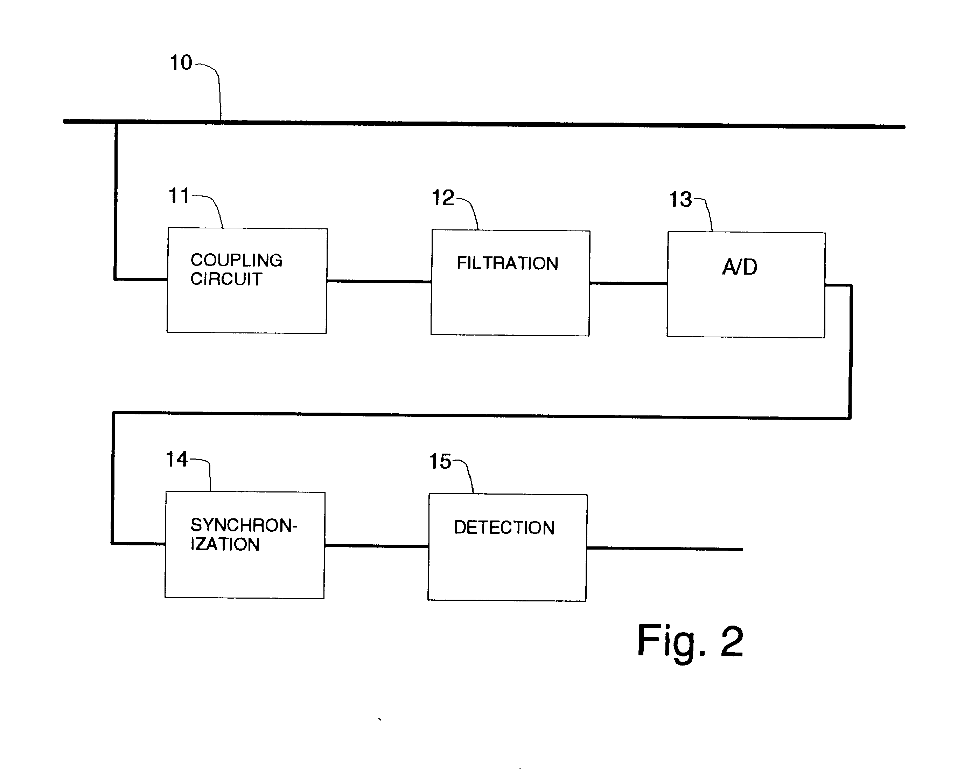

With reference to Fig. 2, a receiving apparatus utilizing the power transmission network as the channel medium of data transmission comprises a coupling circuit 11 suited for connecting the receiver to the electric power transmission network 10. Said power transmission network 10 typically is a medium-voltage network. Following the coupling circuit 11 is a filter block 12 to the end of suppressing radio-frequency interference, the power system frequency and harmonics thereof. After the filter block 12 is connected an A/D converter 13 which performs the conversion of the analog signal to digital format. The digitized serial data stream is synchronized in a synchronizing block 14 for subsequent detection in a detector block 15. The output of the detector block 15 provides a serial-format data bit stream.

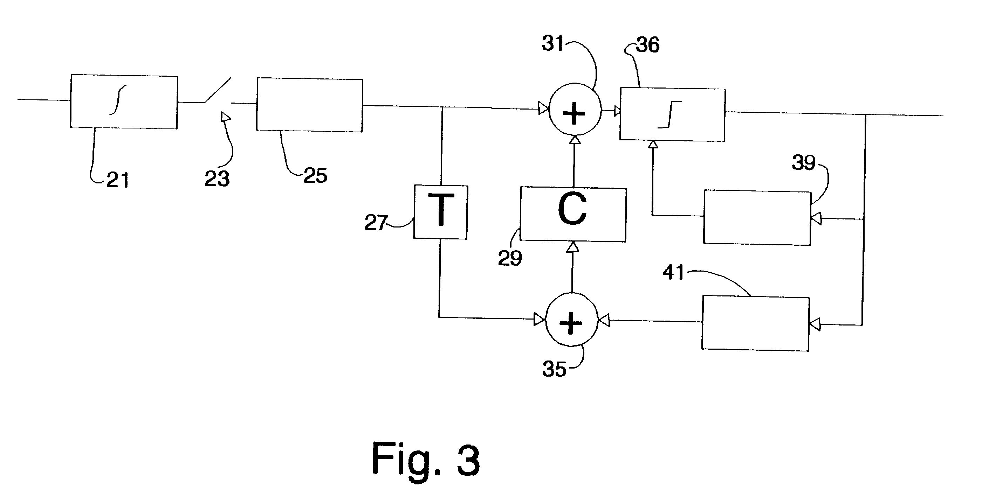

With reference to Fig. 3, the detector according to the invention has as the first stage an integrator 21 in which the signal is integrated in sequences of a single symbol. With the help of a switch 23 the integration results are quantized for an adder-type filter 25, which acts as an adder of two integration results. Accordingly, the entity formed by the integrator 21, the switch 23 and the filter 25 operates as an integrator integrating over the period of two symbols and providing continuously at its output (25) the integral computed over the two latest symbols. As the symbol duration is 20 ms, the integration is carried out for the period duration of the lowest-frequency harmonic $F_h'$ (25 Hz) of the power system fundamental frequency after demodulation to the baseband. Said integration results are taken to an adder 31, to which also the signal obtained from a computation unit 29 is taken. The computation unit 29 itself receives initial information for computation from an adder 35 which performs summing of the output signal from a delay circuit 27. The delay circuit 27 performs delaying of the output signal obtained from the filter 25 for the duration (20 ms) of a single symbol in order to synchronize the input signals to the adder 35. To the adder 35 is also summed the feedback signal obtained from a computation circuit 41 of the comparison reference level. The adder 31 eliminates the effect of pink noise, e.g., a DC shift imposed on the signal. A decision-making block 36 compares the corrected integration result with the data available on the preceding symbol via a block 39, and on the basis of this comparison, the decision on the value of the latter symbol in the integration step is made. Thus, the block 36 is feedback-connected in the above described manner to blocks 39 and 41. Finally, the signals are scaled in a block 41 to appropriate levels for comparison at point 35. The block 39 acting as a memory register always stores the latest decision accomplished by the decision block 36 for use during the next symbol value decision. As the data sequence must according to the invention start with at least one symbol known *a priori* to the end of performing the above-described feedback-connected decision-making, an identification sequence can be sent at the beginning of a message transmission to assure the correctness of such an *a priori* known symbol. Alternatively, at the end of a data sequence, the content of the memory register 39 can be set to a desired value representing an *a priori* known initial symbol value.

Accordingly, when transmitting at 50 bit/s data rate along with a 50 Hz power system fundamental frequency, the integration is advantageously performed over the period of two symbols to suppress the disturbance signals incurred by the power system frequency and its harmonics in the case the carrier center frequency $F_c$ is set in the above-described manner to the middle of the disturbance signal components. Hence, the first symbol of the data sequence must be known *a priori*, or alternatively its initial value must otherwise be set to a correct value. The second (unknown) symbol subjected to integration can then be resolved in the decision-making block 37 of Fig. 3 using, e.g., the following table:

| A *priori* known symbol (1st symbol in sequence) | Integration Result | Symbol to be resolved (2nd symbol in sequence) |
|:---:|:---:|:---:|
| -A | 0 | A |
| -A | -2A | -A |
| A | 2A | A |
| A | 0 | -A |

In the detection process based on the above table, the DC level of the signal is zero and the decision thresholds are at A and -A.

Depending on the detection technique employed, estimates of different decision thresholds must be established. At 12.5 bit/s data rate the decision is made on the basis of detection results integrated over the period of one data bit. Then, the decision threshold is estimated based on the integration results of data bits one and zero, respectively. At 50 bit/s data rate the situation is more complicated, since the integration is always performed over a period of two data bits. Here, the decision thresholds must be determined to both sides of the "zero level" (that is, the average integration result of either symbol 10 or 01). On the basis of these two decision thresholds the resolution is made with regard to which one of the four possible sequential combinations of these two symbols has been received.

The decision thresholds can be estimated by, e.g., computing for the sample values exceeding the zero level an average value such as the arithmetic average or the median value (representing an estimate for the "one" symbol), and correspondingly, for the sample values remaining below the zero level, an average value (representing an estimate for the "zero" symbol). This method, however, is ineffective against white noise or when a disturbance signal at the carrier frequency is summed to the signal being received.

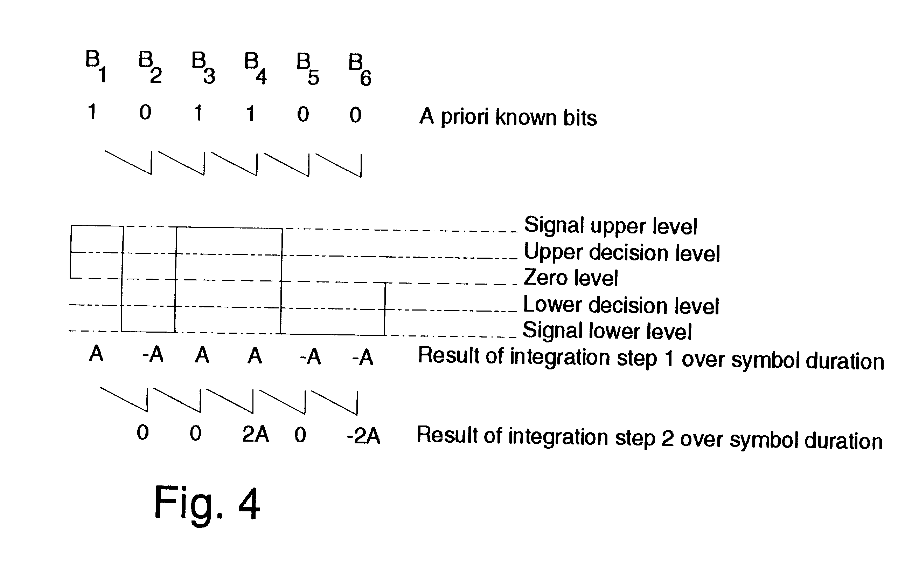

Then, an advantageous result is attained with reference to Fig. 4 by means of utilizing the information conveyed by the *a priori* known symbols so that the integration results are sorted on the basis of the *a priori* known symbols into the average value computation of the "zero" symbols and the "one" symbols, respectively. Fig. 4 illustrates an example of the estimation of decision thresholds for a 6-bit data sequence utilizing *a priori* known data bits $B_1$-$B_6$.

With reference to the diagram, for 12.5 bit/s data rate (performing integration over the period of one data bit), the decision thresholds are estimated using, e.g., the arithmetic average value:

Averaged integration result for symbols corresponding to "one" bits = YIK = (A+A+A)/3 = A
Averaged integration result for symbols corresponding to "zero" bits = NIK = (-A-A-A)/3 = -A
Decision threshold = (YIK+NIK)/2 = (A+(-A)/2 = 0

At 50 bit/s data rate, the decision thresholds are estimated according to the diagram as follows:

Signal upper level = sum of 11 symbols = 2A = 2A
Signal lower level = sum of 00 symbols = -2A = -2A
Zero level 1 = 1st estimate of zero level as average of symbols 10 and 01 = (0+0+0)/3 = 0
Zero level 2 = 2nd estimate of zero level = (Signal upper level + Signal lower level)/2 = 0
Zero level = average of 1st and 2nd estimate = (Zero level 1 + Zero level 2)/2 = 0
Upper decision threshold = Zero level + (Signal upper level - Signal lower level)/4 = 0 + (2A -(2A))/4 = A
Lower decision threshold = Zero level - (Signal upper level - Signal lower level)/4 = 0-(2A -(2A))/4 = -A

In the above example the DC level of the received signal is zero. For the case of a non zero DC level, different integration results are obtained. E.g., if the signal upper level is 3A, the signal lower level is -A and zero level A, the decision thresholds are:

Upper decision threshold = A+(3A-(-A))/4=2A and
lower decision threshold = A-(3A-(-A))/4=0.

At the 50 bit/s data rate, the data sequence 101010... is problematic as no 11 nor 00 symbols exist. The estimation of decision thresholds for such data sequences can be performed in the same manner as for the 12.5 bit/s data rate, namely, by assigning: smallest data sequence integration result = signal lower level and largest data sequence integration result = signal upper level.

At the 12.5 bit/s data rate the detection is performed in a normal manner on the basis of detection results integrated over one data bit by comparing the integration results with the estimated detection threshold.

At the 50 bit/s data rate the integration results are computed over two data bits, whereby feedback-connected decision-making is necessary. The filtering operations convert the white noise to pink noise. When the integration is performed over two data bits, the pink noise is preferably estimated and eliminated prior to detection.

Detection by feedback-connected decision-making requires information on the preceding data bit decision result in order to permit the separation of the 10 and 01 symbols from each other. Correction of the DC level imparted by the noise requires information on the two preceding data bit detection decisions in order to permit the measurement of the DC drift of the preceding symbols.

A simple model algorithm operates as follows (for making a decision on, e.g., the 3rd symbol (whereby in the present case (2PSK) a symbol is represented by a single data bit) and assuming that the 1st and 2nd symbols are known):

1. Required DC level correction is computed using the variables

Level = estimated signal lower level, signal upper level or zero level (selected on the basis of 1st and 2nd *a priori* known symbols)

Gain factor = Constant indicating the gain used in the DC level correction. (Using a larger value of the gain factor increases the effect of DC level correction. If the value of the gain factor is adjusted close to zero, no correction occurs and the algorithm acts as a simple feedback-connected decision-making detector.)

I1 = result of integration step 1 over duration of 1st and 2nd symbols (= data bits)

and inserting them in the equation

$$\text{Correction} = (\text{Level} - I1) \times \text{Gain factor}$$

2. Symbol to be detected is corrected prior to detection
    I2 = result of integration step 2 over duration of 2nd and 3rd symbols I2 = I2 + Correction

3. Feedback-connected decision-making detection is performed
    If I2 > upper decision threshold, the 11 sequence is resolved as the 3rd symbol = 1
    If I2 < lower decision threshold, the 00 sequence is resolved as the 3rd symbol = 0
    If the lower decision threshold <= I2 <= upper decision threshold, the 10, or correspondingly, the 01 sequence is resolved as:

if 2nd symbol = 1, then 3rd symbol = 0
if 2nd symbol = 0, then 3rd symbol = I.

4. Determination of the 4th symbol is commenced as described in item 1.

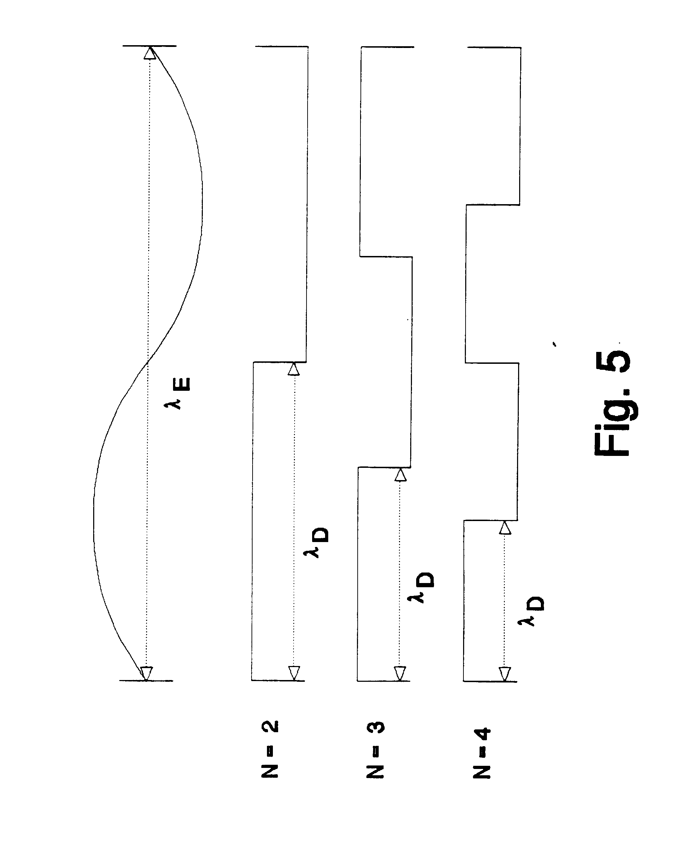

With reference to Fig. 5, the basic precondition for the implementation according to the invention is that the data transmission rate is selected in such a manner that the period duration $\lambda_n'$ or a multiple thereof of the lowest-frequency harmonic $F_h'$ (25 Hz) of the power system fundamental frequency after demodulation to the baseband is an integer multiple of the single symbol duration $\lambda_D$. In the diagram the uppermost graph represents the harmonic of the power system fundamental frequency, whilst the next below illustrates data transmission at a data rate (50 bit/s) twice the harmonic frequency of the power system fundamental frequency, whereby the symbol duration $\lambda_D$ is half the period duration $\lambda_h'$ of the harmonic frequency $F_h'$ of the power system fundamental frequency. Consequently, the graph fulfills the precondition $N \times \lambda_D = \lambda_h'$, where $N = 2$. The next graph further below represents data transmission at 75 bit/s, and correspondingly, the value of the constant N in this case is 3. Finally, the lowermost graph represents data transmission at 100 bit/s data rate, whereby $N = 4$. All integer values starting from 1 for the constant N are feasible within the scope of the invention.

When the higher data rates (75 bit/s and 100 bit/s) mentioned above are used, the integration must be extended over the entire period duration of the disturbance frequency component. Therefore, to resolve the last symbol at 75 bit/s data rate, the two first symbols of the integration sequence must be known *a priori*, and correspondingly, at 100 bit/s data rate the 3 first symbols must be known *a priori* to resolve the last symbol.

As is evident from the description above, the number of decision thresholds increases when the integration is made over the duration of two symbols instead of one. A similar increase occurs when the number of symbols to be integrated is further increased to, e.g., three or four as illustrated in Fig. 5.

## Claims

1. A detection method for transmission of data in a power transmission network operated at a power system fundamental frequency $F_E$ with a corresponding period duration $\lambda_E$, said method comprising

   - transmitting data as symbols, each symbol having a duration of $\lambda_D$,

   - as necessary converting the data into serial-format digital values for detection, whereby the harmonic disturbance components $F_h$ of the power system fundamental frequency are converted into baseband disturbance signal components $F_h'$ having a period duration of $\lambda_h'$, and said serial-format data comprising a sequence of n temporally successive symbols $B_1$-$B_n$, and

   - the symbol duration $\lambda_D$ is selected in such a manner that the single-period duration $\lambda_h'$ of the lowest-frequency disturbance signal component $F_h'$ in the baseband is equal to an integer (N) multiple of a single-symbol duration $\lambda_D$,

   **characterized** in that

   - at least the value of the first symbol ($B_1$) in the data sequence is determined *a priori*,

   - subsequently recursive integration steps are performed over the duration of the successive symbols $B_i$, $B_{i+1}$ of the data sequence included in at least one period duration $\lambda_h'$ of the baseband disturbance signal component so that each unknown symbol $B_2$-$B_n$ of the data sequence in turn becomes the last symbol $B_{i+1}$ in the integration step, and

   - on the basis of the final result from the integration steps and the value of at least one temporally preceding symbol $B_i$, the value of each symbol $B_2$-$B_n$ successive thereto is determined.

2. A method as defined in claim 1, **characterized** in that, subsequent to the integration steps, the pink noise included in the signal is determined, and prior to resolving the symbol value, the error caused by the noise is corrected.

3. A method as defined in claim 2, **characterized** in that the long-term fluctuation of the signal is determined.

4. A detection apparatus for transmission of data in a power transmission network operated at a power system fundamental frequency $F_E$ with a corresponding period duration $\lambda_E$, said apparatus comprising

   - conversion means for converting the signal received from the electric power transmission network to a baseband frequency of $F_c'$, and

   - integration means (21) for integrating the signal over the single-period duration $\lambda_h'$ of the lowest-frequency disturbance signal component $F_h'$ converted to the baseband, or an integer multiple thereof such that the symbol duration $\lambda_D$ is selected in such a manner that the single-period duration $\lambda_h'$ of the lowest-frequency

disturbance signal component $F_h'$ in the baseband is equal to an integer (N) multiple of a single-symbol duration $\lambda_D$,

**characterized** by

- feedback-connected decision-making means (36, 39) for determining the last symbol $B_{i+1}$ of the integrated signal on the basis of at least one symbol $B_i$ determined *a priori*.

5. An apparatus as defined in claim 4, **characterized** in that said apparatus further includes correction means (41, 35, 31, 29, 27) for the detection of pink noise and elimination thereof.


**Patentansprüche**

1. Verfahren zur Erfassung von gesendeten Daten in einer elektrischen Energieverteilungsanlage, die mit einer Energiesystemgrundfrequenz $F_E$ und einer zugehörigen Periodendauer $\lambda_E$ betrieben wird,

   - wobei die Daten als Symbole übertragen werden, deren jedes eine Dauer von $\lambda_D$ hat,

   - wobei, wenn notwendig, die Daten in Digitalwerte zur Erfassung in ein serielles Format umgewandelt werden,

   - wobei die harmonische Störkomponente $F_h$ der Energiesystem-Grundfrequenz in eine Störsignalkomponente $F_h'$ mit einer Periodendauer von $\lambda_h'$ umgewandelt wird und die Daten im seriellen Format eine Folge von n zeitlich aufeinander folgenden Symbolen $B_1$-$B_n$ aufweist und

   - die Symboldauer $\lambda_D$ in einer solchen Weise gewählt wird, daß die Einzelperiodendauer $\lambda_h'$ der Störsignalkomponente $F_h'$ im Grundband mit der niedrigsten Frequenz gleich einem ganzzahligen Vielfachen fachen N der Einzelsignaldauer $\lambda_D$ ist.

   dadurch gekennzeichnet, daß

   - wenigstens der Wert des ersten Symbols ($B_1$) in der Datenfolge a priori bestimmt wird,

   - nachfolgend rekursive Integrationsschritte über die Dauer der nachfolgenden Symbole $B_i$, $B_{i+1}$ der in mindestens einer Periodendauer $\lambda_h'$ enthaltenen Datensequenz der Grundbandstörsignalkomponente durchgeführt werden, so daß jedes unbekannte Symbol $B_2$-$B_n$ der Datensequenz das letzte Symbol $B_{i+1}$ des Integrationsschrittes wird und

   - auf der Basis des Ergebnisses der Integrationsschritte und dem Wert von wenigstens einem zeitlich vorangehenden Symbol $B_i$ der Wert jedes diesem folgenden Symbols $B_2$-$B_n$ bestimmt wird.

2. Verfahren nach Anspruch 1, dadurch gekennzeichnet, daß nach den Integrationsschritten das im Signal enthaltene farbige Rauschen bestimmt wird und vor dem Auflösen des Symbolwerts eine Korrektur des durch das Rauschen bewirkten Fehlers erfolgt.

3. Verfahren nach Anspruch 2, dadurch gekennzeichnet, daß die Langzeitfluktuation des Signals bestimmt wird.

4. Vorrichtung zur Erfassung von gesendeten Daten in einer elektrischen Energieverteilungsanlage, die mit einer Energiesystem-Funtamentalfrequenz $F_E$ und einer zugehörigen Periodendauer $\lambda_e$ betrieben wird, mit

   - Umwandlungseinrichtungen zum Umwandeln des aus der Energieverteilungsanlage empfangenen Signals zu einer Grundbandfrequenz $F_c$ und

   - Integriereinrichtungen (21) zum Integrieren des Signals über die Einzelperiodendauer $\lambda_h'$ der niederstfrequenten ins Grundband konvertierten Störsignalkomponenten $F_h'$ oder eines ganzzeiligen Vielfachen derselben derart, daß die Symboldauer $\lambda_D$ in einer solchen Weise gewählt ist, daß die Einzelperiodendauer $\lambda_h'$ der niederstfrequenten Störsignalkomponente $F_h'$ im Grundband gleich einem ganzzahligen Vielfachen (N) der Einzelsymboldauer $\lambda_D$ ist,

dadurch gekennzeichnet,

daß Feedback-Entscheidungseinrichtungen (36, 39) zur Bestimmung des letzten Symbols $B_{j+1}$ des integrierten Signals auf der Basis wenigstens eines a priori bestimmten Symbols $B_i$ vorhanden sind.

**5.** Vorrichtung nach Anspruch 4, dadurch gekennzeichnet, daß sie weiter Korrektureinrichtungen (41, 35, 31, 29, 27) zur Erfassung des farbigen Rauschens und Eliminierung desselben aufweist.

**Revendications**

**1.** Procédé de détection pour une transmission de données dans un réseau de transport d'énergie électrique exploité à une fréquence fondamentale $F_E$ de système de production d'énergie avec une durée correspondante $\lambda_E$ de période, ledit procédé comprenant de :

- transmettre des données sous forme de symboles, chaque symbole ayant une durée de $\lambda_D$,
- quand c'est nécessaire, convertir les données en des valeurs numériques de format en série en vue d'une détection, afin que les composantes harmoniques $F_h$ de perturbation de la fréquence fondamentale $F_E$ de système de production d'énergie soient converties en des composantes harmoniques $F_h'$ de signal de perturbation de bande de base ayant une durée $\lambda_h'$ de période, et ledit format de données en série comprenant une séquence de n symboles $B_1$ à $B_n$ se succédant dans le temps, et
- la durée $\lambda_D$ de symbole est sélectionnée de manière que la durée $\lambda_h'$ unitaire de période de la composante $F_h'$ de signal de perturbation à la fréquence la plus basse dans la bande de base soit égale à un multiple entier (N) d'une durée $\lambda_D$ unitaire de symbole,

   caractérisé en ce que

- au moins la valeur du premier symbole ($B_1$) dans la séquence de données est déterminée a *priori,*
- des étapes récurrentes d'integration successives sont exécutées pendant la durée des symboles successifs $B_i$, $B_{i+1}$ de la séquence de données comprise dans au moins une durée d'une période $\lambda_h'$ de la composante de signal de perturbation de bande de base, de sorte que chaque symbole inconnu $B_2$ à $B_n$ de la séquence de données devient à son tour le dernier symbole $B_{i+1}$ dans l'étape d'intégration, et
- sur la base du résultat final des étapes d'intégration et de la valeur d'au moins un symbole $B_i$ le précédant dans le temps, la valeur de chaque symbole $B_2$ à $B_n$ qui le suit est déterminée.

**2.** Procédé selon la revendication 1, caractérisé en ce que, après les étapes d'intégration, le bruit rose inclus dans le signal est déterminé, et avant de résoudre la valeur de symbole, l'erreur causée par le bruit est corrigée.

**3.** Procédé selon la revendication 2, caractérisé en ce que les fluctuations à long terme du signal sont déterminées.

**4.** Appareil de détection pour une transmission de données dans un réseau de transport d'énergie électrique exploité à une fréquence fondamentale $F_E$ de système de production d'énergie avec une durée correspondante $\lambda_E$ de période, ledit appareil comprenant :

- des moyens de conversion pour convertir le signal reçu du réseau de transport d'énergie électrique en une fréquence de bande de base de $F_c'$, et
- des moyens d'intégration (21) pour intégrer le signal sur la durée $\lambda_h'$ unitaire de période de la composantes harmoniques $F_h'$ de signal de perturbation à la fréquence la plus basse convertie en la bande de base, ou un multiple entier de celle-ci, de sorte que la durée $\lambda_D$ de symbole soit sélectionnée de manière que la durée $\lambda_h'$ unitaire de période de la composantes harmoniques $F_h'$ de signal de perturbation à la fréquence la plus basse dans la bande de base soit égale à un multiple entier (N) d'une durée $\lambda_D$ unitaire de symbole,

   caractérisé par

- des moyens de prise de décision (36, 39) connectés en boucle de retour pour déterminer le dernier symbole $B_{i+1}$ du signal intégré sur la base d'au moins un symbole $B_i$ déterminé a *priori.*

**5.** Appareil tel que défini à la revendication 4, caractérisé en ce que ledit appareil comprend en outre des moyens de correction (41, 35, 31, 29, 27) pour la détection d'un bruit rose et son élimination.

Fig. 1a

Fig. 1b

Fig. 2

EP 0 633 669 B1

Fig. 3

EP 0 633 669 B1

EP 0 633 669 B1

$B_1$  $B_2$  $B_3$  $B_4$  $B_5$  $B_6$

1    0    1    1    0    0    A priori known bits

Signal upper level
Upper decision level
Zero level
Lower decision level
Signal lower level

A   -A   A   A   -A   -A   Result of integration step 1 over symbol duration

0    0    2A    0    -2A   Result of integration step 2 over symbol duration

# Fig. 4

$\lambda_E$

N = 2

$\lambda_D$

N = 3

$\lambda_D$

N = 4

$\lambda_D$

# Fig. 5

EP 0 633 669 B1